# EUROPEAN PATENT APPLICATION

(11) **EP 4 528 289 A1**
(43) Date of publication of application: **26.03.2025**
(21) Application number: 24202347.1
(22) Date of filing: 24.09.2024
(51) Int. Cl.: G01P 13/02, B64D 43/02, G01P 5/10

(54) **DETERMINING A FLIGHT PARAMETER BASED ON A LEADING EDGE TEMPERATURE DISTRIBUTION**

(30) Priority: 25.09.2023 US 202318372503
(71) Applicant: Rohr, Inc., Chula Vista, CA 91910-2098 (US)
(72) Inventor: KESTLER, Steven, San Diego, 92104 (US)
(74) Representative: Dehns

(57) **Abstract**

A method of operation is provided during which an aircraft parameter is determined indicative of a position of a longitudinal axis (22) of an aircraft (20) during a flight of the aircraft (20). A wind parameter is determined indicative of a relative wind direction (84) during the flight of the aircraft (20). The wind parameter is determined based on a temperature distribution about a leading edge (76) of a component (62) of the aircraft (20). An offset angle between the longitudinal axis (22) of the aircraft (20) and the relative wind is determined based on the aircraft parameter and the wind parameter.

## Description

### BACKGROUND

### 1. Technical Field

This disclosure relates generally to an aircraft and, more particularly, to aircraft instrumentation.

### 2. Background Information

An aircraft may include multiple instruments for determining various flight parameters such as angle of attack. The instrument(s) used for determining the angle of attack may be positioned on an exterior of the aircraft and, thus, may be susceptible to damage or other disruption from foreign objects such as ice, birds, volcanic ash and the like. While these known instruments have various benefits, there is still room in the art for improvement.

### SUMMARY OF THE DISCLOSURE

According to an aspect of the present disclosure, a method of operation is provided during which an aircraft parameter is determined indicative of a position of a longitudinal axis of an aircraft during a flight of the aircraft. A wind parameter is determined indicative of a relative wind direction during the flight of the aircraft. The wind parameter is determined based on a temperature distribution about a leading edge of a component of the aircraft. An offset angle between the longitudinal axis of the aircraft and the relative wind is determined based on the aircraft parameter and the wind parameter.

In an embodiment of the above, the offset angle comprises an angle of attack of the aircraft.

In a further embodiment of any of the above, the aircraft parameter comprises a pitch attitude of the aircraft between the longitudinal axis of the aircraft and a horizon line, and the wind parameter comprises a flight path angle between the relative wind direction and the horizon line.

In a further embodiment of any of the above, the offset angle comprises a sideslip angle of the aircraft.

In a further embodiment of any of the above, the aircraft parameter is determined using a gyroscope onboard the aircraft.

In a further embodiment of any of the above, the determining of the wind parameter comprises measuring a temperature at each of a plurality of measurement locations about the leading edge of the component of the aircraft to determine the temperature distribution, identifying a high temperature location out of the plurality of measurement locations with a highest measured temperature in the temperature distribution, and determining the wind parameter based on a position of the high temperature location about the leading edge of the component of the aircraft.

In a further embodiment of any of the above, the component of the aircraft comprises a skin and a cavity, an interior surface of the skin forms a peripheral boundary of the cavity within the component of the aircraft, and an exterior surface of the skin is exposed to an environment external to the aircraft, and the temperature is measured at each of the plurality of measurement locations using one or more temperature sensors connected to the skin at the interior surface.

In a further embodiment of any of the above, the component of the aircraft comprises a skin and a cavity, an interior surface of the skin forms a peripheral boundary of the cavity within the component of the aircraft, and an exterior surface of the skin is exposed to an environment external to the aircraft, and the temperature is measured at each of the plurality of measurement locations using one or more temperature sensors disposed within the cavity and thermally coupled to the skin.

In a further embodiment of any of the above, the temperature is measured at each of the plurality of measurement locations using one or more temperature sensors disposed within the component of the aircraft.

In a further embodiment of any of the above, the component comprises an aircraft airfoil.

According to another aspect of the present disclosure, another method of operation is provided during which a temperature at a plurality of measurement locations about a leading edge of a component of an aircraft is measured to determine a temperature distribution. The temperature is measured at the measurement locations using one or more temperature sensors disposed within the component of the aircraft. A high temperature location is identified out of the measurement locations with a highest measured temperature in the temperature distribution. A parameter for the aircraft is determined based on a position of the high temperature location about the leading edge of the component of the aircraft.

In an embodiment of the above, the parameter is indicative of a relative wind direction during the flight of the aircraft.

In a further embodiment of any of the above, the parameter is indicative of a stagnation point about the leading edge of the component of the aircraft.

In a further embodiment of any of the above, the method further comprises determining an angle of attack of the aircraft based on the parameter.

In a further embodiment of any of the above, the method further comprises determining a sideslip angle of the aircraft based on the parameter.

According to still another aspect of the present disclosure, another method of operation is provided during which an aircraft parameter is determined indicative of a position of a longitudinal axis of an aircraft during a flight of the aircraft. A wind parameter is determined indicative of a relative wind direction during the flight of the aircraft. The wind parameter is determined based on a position of a stagnation point about a leading edge of a component of the aircraft. An offset angle between the longitudinal axis of the aircraft and the relative wind is determined based on the aircraft parameter and the wind parameter.

In an embodiment of the above, the determining of the wind parameter comprises measuring a temperature at a plurality of measurement locations about the leading edge of the component of the aircraft to determine a temperature distribution about the leading edge of the component of the aircraft, identifying a high temperature location out of the plurality of measurement locations with a highest measured temperature in the temperature distribution, and determining the position of the stagnation point based on a position of the high temperature location about the leading edge of the component of the aircraft.

In a further embodiment of any of the above, the wind parameter is determined using one or more sensors disposed within an interior of the component of the aircraft.

In a further embodiment of any of the above, the aircraft parameter is determined using a gyroscope onboard the aircraft, and the offset angle comprises an angle of attack or a sideslip angle of the aircraft.

In a further embodiment of any of the above, the component comprises an aircraft wing.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a perspective illustration of an aircraft.
FIG. 2 is a side view illustration of the aircraft during aircraft flight.
FIG. 3 is a schematic illustration of a flight information system for determining one or more flight parameters of the aircraft.
FIG. 4 is a schematic illustration of an aircraft component with a temperature sensor.
FIG. 5 is a flow diagram of an operating method for an aircraft.
FIG. 6 is a graph plotting chord position versus surface temperature for various different angles of attack.
FIG. 7 is a top view illustration of the aircraft during aircraft flight.

### DETAILED DESCRIPTION

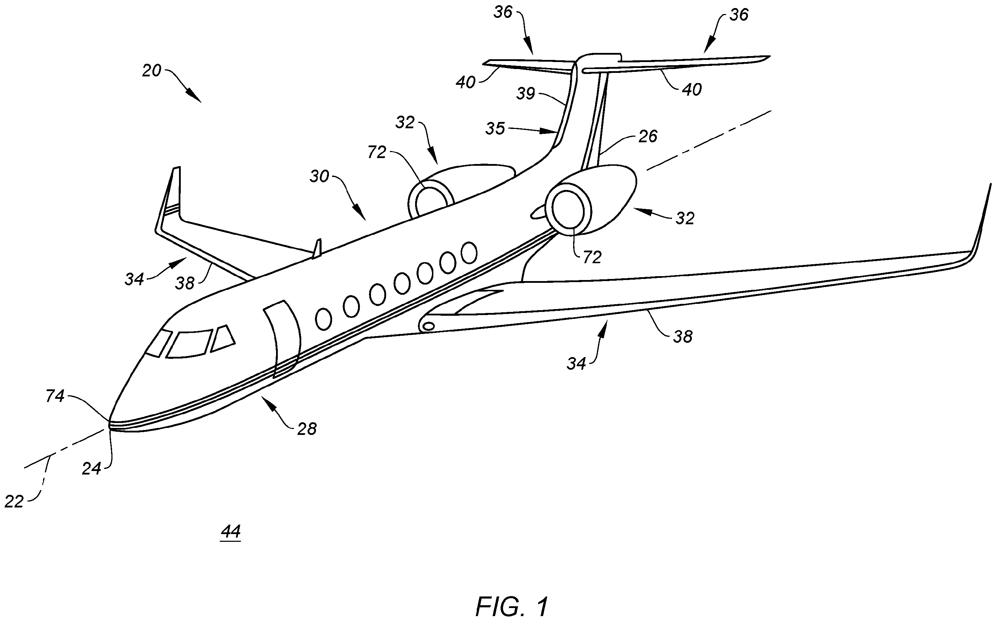

FIG. 1 illustrates an aircraft 20 during flight. For ease of description, the aircraft 20 is shown in FIG. 1 and generally described below as an airplane. The methods and systems of the present disclosure, however, are not limited to such an exemplary aircraft. The aircraft 20, for example, may alternatively be configured as a helicopter, a drone (e.g., an unmanned aerial vehicle (UAV)), a self-propelled projectile or any other manned or unmanned aerial vehicle or system.

The aircraft 20 extends along a longitudinal axis 22 of the aircraft 20 between a forward, upstream end 24 of the aircraft 20 to an aft, downstream end 26 (e.g., tail end) of the aircraft 20, which longitudinal axis 22 may also be a longitudinal centerline of the aircraft 20 and its fuselage 28. The aircraft 20 of FIG. 1 includes an airframe 30 and one or more propulsion systems 32; e.g., jet engines, propeller engines, etc.

The airframe 30 includes the fuselage 28 and a plurality of aircraft airfoils such as a plurality of wings 34, at least one vertical stabilizer 35, a plurality of horizontal stabilizers 36 and the like. The wings 34 are connected to and disposed on opposing lateral sides of the fuselage 28. Each of these wings 34 projects laterally out from the fuselage 28, along a span of the respective wing 34, to a tip of the respective wing 34. The vertical stabilizer 35 is connected to the fuselage 28 and disposed at (e.g., on, adjacent or proximate) the aircraft downstream end 26. This vertical stabilizer 35 projects vertically out from the fuselage 28, along a span of the vertical stabilizer 35, to a tip of the vertical stabilizer 35. The horizontal stabilizers 36 are connected to and disposed on opposing lateral sides of the vertical stabilizer 35 at the tip of the vertical stabilizers 35 (or alternatively the fuselage 28). Each of these horizontal stabilizers 36 projects laterally out from the vertical stabilizer 35 (or alternatively the fuselage 28), along a span of the respective horizontal stabilizer 36, to a tip of the respective horizontal stabilizer 36. Each of the aircraft airfoils 34-36 has a leading edge 38-40 which extends along the respective airfoil span.

The propulsion systems 32 are disposed on opposing lateral sides of the fuselage 28. Each of these propulsion systems 32 is connected to the fuselage 28 proximate the aircraft downstream end 26. However, in other embodiments, each propulsion system 32 may be connected to a respective one of the wings 34 or otherwise located with the airframe 30.

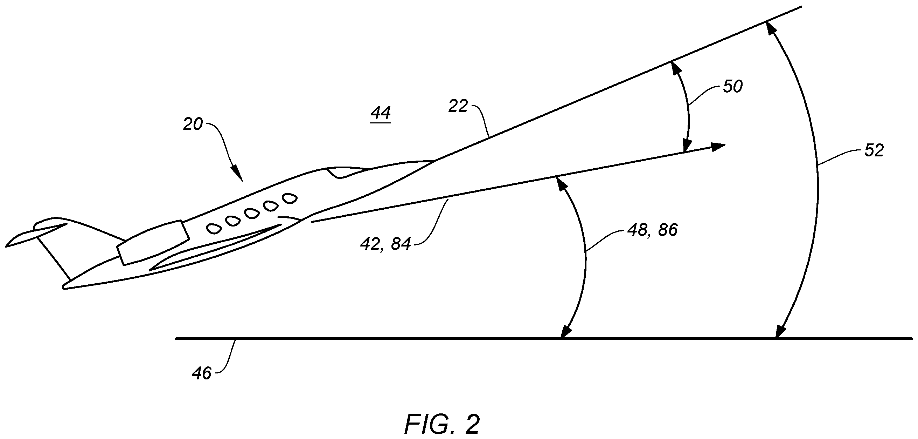

Referring to FIG. 2, during aircraft flight, the aircraft 20 moves along a flight path 42 through an external environment 44 - the surrounding air. During certain aircraft maneuvers (e.g., aircraft takeoff, aircraft climb, aircraft descent, aircraft landing, etc.), the aircraft flight path 42 may be angularly offset from a horizon line 46 by a flight path angle 48. The aircraft flight path 42 may also be angularly offset from the aircraft 20 and its longitudinal axis 22 by an angle of attack 50. Moreover, the aircraft 20 and its longitudinal axis 22 may be angularly offset from the horizon line 46 by a pitch attitude 52, where the angle of attack 50 is equal to the pitch attitude 52 minus the flight path angle 48. Knowing these flight parameters - the pitch attitude 52, the flight path angle 48 and the angle of attack 50 - as well as other flight parameters may be useful for a pilot of the aircraft 20.

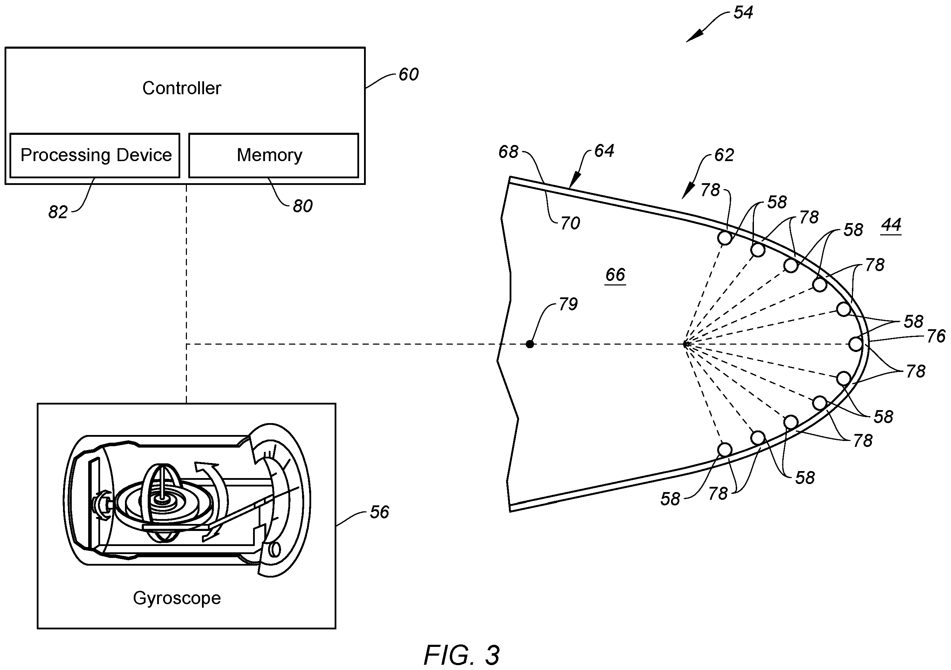

FIG. 3 illustrates a flight information system 54 for determining one or more flight parameters of the aircraft 20. This flight information system 54 includes a gyroscope 56, one or more temperature sensors 58 and a controller 60.

The temperature sensors 58 are arranged with (e.g., within an interior of) a component 62 of the aircraft 20. This aircraft component 62 includes an exterior skin 64 and an internal cavity 66. The exterior skin 64 is disposed between and fluidly separates the environment 44 external to the aircraft 20 from the internal cavity 66. The exterior skin 64 of FIG. 3, for example, includes an exterior surface 68 and an interior surface 70. The skin exterior surface 68 is exposed to the external environment 44. The interior surface 70 forms a peripheral boundary of the internal cavity 66 within the aircraft component 62. Examples of the aircraft component 62 include, referring to FIG. 1, one of the wings 34, one of the horizontal stabilizers 36, an inlet lip 72 for one of the propulsion systems 32, a nose 74 of the fuselage 28, or any other component of the aircraft 20 with a (e.g., generally horizontal extending) leading edge exposed to the external environment 44.

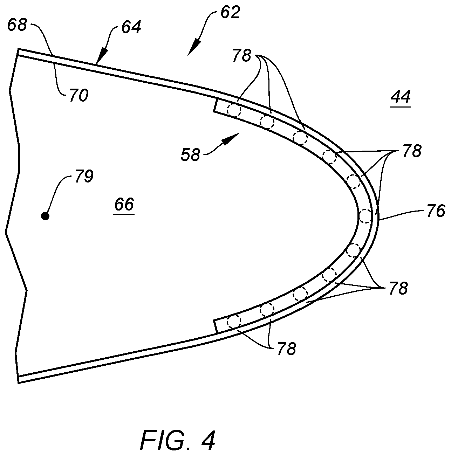

The temperature sensors 58 of FIG. 3 are disposed within the internal cavity 66. Each of these temperature sensors 58 is thermally coupled to the exterior skin 64. The temperature sensors 58 of FIG. 3, for example, are arranged in an array along the exterior skin 64 and its interior surface 70. This sensor array extends circumferentially about a leading edge 76 of the aircraft component 62. More particularly, the temperature sensors 58 are arranged at a plurality of discrete known measurement locations 78 (e.g., equally) spaced along the interior surface 70 and about the leading edge 76; e.g., in a plane perpendicular to a span 79 of the aircraft component 62. With this arrangement, the temperature sensors 58 are housed within the aircraft component 62. The temperature sensors 58 are thereby shielded from foreign objects within the external environment 44 which the aircraft 20 and its aircraft component 62 may encounter from time to time; e.g., ice, birds, volcanic ash and the like. Examples of the temperature sensors 58 include, but are not limited to, resistance temperature detectors (RTD), fiber Bragg grating (FBG) devices, thermocouples, and Fabry-Perot sensors. Here, each temperature sensor 58 is a discrete device. In other embodiments however, referring to FIG. 4, the array of temperature sensors 58 may be incorporated into (or replaced by) a single fiber Bragg grating (FBG) device, or multiple fiber Bragg grating devices.

The controller 60 of FIG. 3 is in signal communication (e.g., hardwired and/or wirelessly coupled) with the gyroscope 56 and the one or more temperature sensors 58 (see also FIG. 4). The controller 60 may be implemented with a combination of hardware and software. The hardware may include a memory 80 and at least one processing device 82, which processing device 82 may include one or more single-core and/or multi-core processors. The hardware may also or alternatively include analog and/or digital circuitry other than that described above.

The memory 80 is configured to store software (e.g., program instructions) for execution by the processing device 82, which software execution may control and/or facilitate performance of one or more operations such as those described below. The memory 80 may be a non-transitory computer readable medium. For example, the memory 80 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

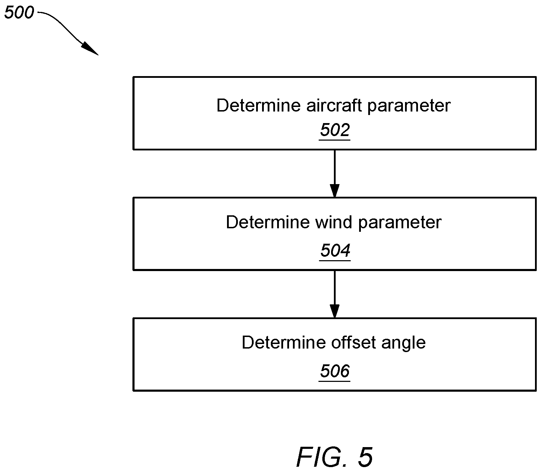

FIG. 5 is a flow diagram of an operating method 500 for an aircraft. For ease of description, the operating method 500 is described below with respect to the aircraft 20 of FIG. 1 and the flight information system 54 of FIG. 3 (or FIG. 4). The operating method 500 of the present disclosure, however, is not limited to performance with such elements.

In step 502, an aircraft parameter is determined. This aircraft parameter is indicative of a position of the aircraft 20 and its longitudinal axis 22 during the aircraft flight (see FIG. 2). The aircraft parameter, for example, may be the pitch attitude 52 of the aircraft 20. The aircraft parameter may be determined using the gyroscope 56 or any other suitable aircraft instrument. The aircraft parameter may then be provided (e.g., signaled) to the controller 60.

In step 504, a wind parameter is determined. This wind parameter is indicative of a relative wind direction 84 during the aircraft flight (see FIG. 2), where a vector of the relative wind direction 84 is parallel and opposite a vector of the flight path 42. The wind parameter, for example, may be the flight path angle 48 of the aircraft 20; e.g., a relative wind direction angle 86 between the relative wind direction 84 and the horizon line 46.

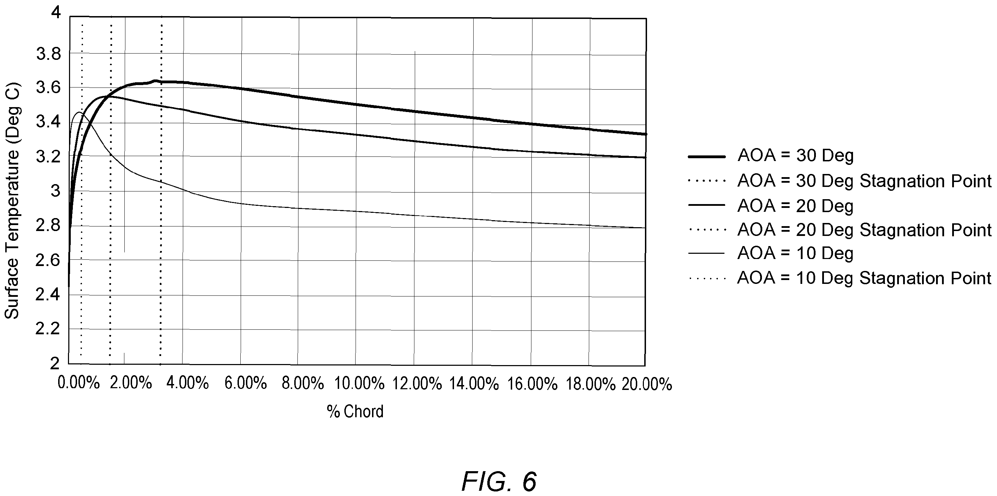

The wind parameter may be determined based on a temperature distribution about the leading edge 76 of the aircraft component 62. A temperature of the exterior skin 64 at each of the measurement locations 78, for example, may be measured by a respective one of the temperature sensors 58 to determine the temperature distribution. This temperature distribution is indicative of a changing temperature profile of the exterior skin 64 about its leading edge 76. The controller 60 may analyze the temperature distribution to identify which one of the measurement locations 78 is a high temperature location. This high temperature location is the measurement location 78 associated with a highest measured temperature in the temperature distribution. The high temperature location correlates with a stagnation point along the exterior surface 68 on or near the leading edge 76. The stagnation point is aligned with a point along the exterior surface 68 where the relative wind direction vector is coincident with and perpendicular to the exterior surface 68. The controller 60 may thereby determine a wind parameter such as the flight path angle 48 of the aircraft 20 / the relative wind direction angle 86 by determining the high temperature location. As shown in FIG. 6, the stagnation point directly correlates to a wind parameter such as the flight path angle 48 of the aircraft 20 / the relative wind direction angle 86.

For ease of description, the above assumes that a single one of the measurement locations 78 is associated with the highest measured temperature of the exterior skin 64. However, it is possible two adjacent measurement locations 78 may both be associated with the highest measured temperature of the exterior skin 64. In such a circumstance, the controller 60 may determine an actual location of the highest temperature is between the adjacent measurement locations 78. Alternatively, the controller 60 may select one of the two adjacent measurement locations 78 (according to a predetermined method) as being the high temperature location for the purpose of the operation method 500, particularly where the measurement locations 78 as close together for example.

In step 506, an offset angle is determined, where the offset angle may be the angle of attack 50 (see FIG. 2). The controller 60, for example, may process the aircraft parameter and the wind parameter to determine the offset angle. The controller 60 may substrate the flight path angle 48 of the aircraft 20 (or the relative wind direction angle 86) from the flight path angle 48 to determine the offset angle.

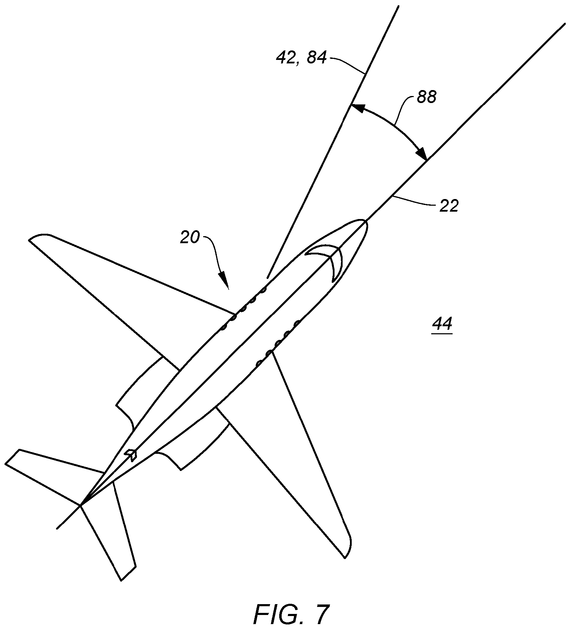

While the operating method 500 is described above with respect to determine the angle of attack 50, the present disclosure is not limited to determining such an exemplary offset angle. For example, referring to FIG. 7, the operating method 500 may also or alternatively determine a sideslip angle 88. The sideslip angle 88 is measured between the aircraft flight path 42 (or the relative wind direction 84) and the longitudinal axis 22. For such embodiments, the aircraft component 62 of FIG. 3 may be configured as, referring to FIG. 1, the vertical stabilizer 35, the inlet lip 72 for one of the propulsion systems 32, the nose 74 of the fuselage 28, or any other component of the aircraft 20 with a (e.g., generally vertical extending) leading edge exposed to the external environment 44.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A method of operation, comprising:
determining an aircraft parameter indicative of a position of a longitudinal axis (22) of an aircraft (20) during a flight of the aircraft (20);
determining a wind parameter indicative of a relative wind direction (84) during the flight of the aircraft (20), the wind parameter determined based on a temperature distribution about a leading edge (76) of a component (62) of the aircraft (20); and
determining an offset angle between the longitudinal axis (22) of the aircraft (20) and the relative wind based on the aircraft parameter and the wind parameter.

2. The method of claim 1, wherein the offset angle comprises:
an angle of attack (50) of the aircraft (20); and/or
a sideslip angle (88) of the aircraft (20).

3. The method of claim 1 or 2, wherein:
the aircraft parameter comprises a pitch attitude (52) of the aircraft (20) between the longitudinal axis (22) of the aircraft (20) and a horizon line (46); and
the wind parameter comprises a flight path angle (48) between the relative wind direction (84) and the horizon line (46).

4. The method of any preceding claim, wherein the aircraft parameter is determined using a gyroscope (56) onboard the aircraft (20).

5. The method of any preceding claim, wherein the determining of the wind parameter comprises:
measuring a temperature at each of a plurality of measurement locations (78) about the leading edge (76) of the component (62) of the aircraft (20) to determine the temperature distribution;
identifying a high temperature location out of the plurality of measurement locations (78) with a highest measured temperature in the temperature distribution; and
determining the wind parameter based on a position of the high temperature location about the leading edge (76) of the component (62) of the aircraft (20).

6. The method of claim 5, wherein:
the component (62) of the aircraft (20) comprises a skin (64) and a cavity (66), an interior surface (70) of the skin (64) forms a peripheral boundary of the cavity (66) within the component (62) of the aircraft (20), and an exterior surface of the skin (64) is exposed to an environment external to the aircraft (20); and
the temperature is measured at each of the plurality of measurement locations (78) using one or more temperature sensors (58) connected to the skin (64) at the interior surface (70) and/or disposed within the cavity (66) and thermally coupled to the skin (64).

7. The method of claim 5, wherein the temperature is measured at each of the plurality of measurement locations (78) using one or more temperature sensors (58) disposed within the component (62) of the aircraft (20).

8. The method of any preceding claim, wherein the component (62) comprises an aircraft airfoil (34-36).

9. A method of operation, comprising:
measuring a temperature at a plurality of measurement locations (78) about a leading edge (76) of a component (62) of an aircraft (20) to determine a temperature distribution, the temperature measured at the plurality of measurement locations (78) using one or more temperature sensors (58) disposed within the component (62) of the aircraft (20);
identifying a high temperature location out of the plurality of measurement locations (78) with a highest measured temperature in the temperature distribution; and
determining a parameter for the aircraft (20) based on a position of the high temperature location about the leading edge (76) of the component (62) of the aircraft (20).

10. The method of claim 9, wherein the parameter is indicative of:
a relative wind direction (84) during the flight of the aircraft (20); and/or
a stagnation point about the leading edge (76) of the component (62) of the aircraft (20).

11. The method of claim 9 or 10, further comprising determining:
an angle of attack (50) of the aircraft (20) based on the parameter; and/or
a sideslip angle (88) of the aircraft (20) based on the parameter.

12. A method of operation, comprising:
determining an aircraft parameter indicative of a position of a longitudinal axis (22) of an aircraft (20) during a flight of the aircraft (20);
determining a wind parameter indicative of a relative wind direction (84) during the flight of the aircraft (20), the wind parameter determined based on a position of a stagnation point about a leading edge (76) of a component (62) of the aircraft (20); and
determining an offset angle between the longitudinal axis (22) of the aircraft (20) and the relative wind based on the aircraft parameter and the wind parameter.

13. The method of claim 12, wherein the determining of the wind parameter comprises:
measuring a temperature at a plurality of measurement locations (78) about the leading edge (76) of the component (62) of the aircraft (20) to determine a temperature distribution about the leading edge (76) of the component (62) of the aircraft (20);
identifying a high temperature location out of the plurality of measurement locations (78) with a highest measured temperature in the temperature distribution; and
determining the position of the stagnation point based on a position of the high temperature location about the leading edge (76) of the component (62) of the aircraft (20).

14. The method of claim 12 or 13, wherein:
the wind parameter is determined using one or more sensors disposed within an interior (74) of the component (62) of the aircraft (20); and/or
the component (62) comprises an aircraft wing (34).

15. The method of any of claims 12 to 14, wherein:
the aircraft parameter is determined using a gyroscope (56) onboard the aircraft (20); and
the offset angle comprises an angle of attack (50) or a sideslip angle (88) of the aircraft (20).
